Europäisches Patentamt

European Patent Office

Office européen des brevets

(11) Publication number: **0 574 005 A2**

# EUROPEAN PATENT APPLICATION

(21) Application number: **93109382.7**

(22) Date of filing: **11.06.93**

(51) Int. Cl.⁵: **G02B 5/32**, G02B 27/00, G03H 1/26

(30) Priority: **12.06.92 JP 179407/92**
**02.10.92 JP 289571/92**

(43) Date of publication of application:
**15.12.93 Bulletin 93/50**

(84) Designated Contracting States:
**AT BE CH DE DK ES FR GB GR IE IT LI LU NL PT SE**

(71) Applicant: **CANON KABUSHIKI KAISHA**
**30-2, 3-chome, Shimomaruko,**
**Ohta-ku**
**Tokyo(JP)**

(72) Inventor: **Taniguchi, Naosato, c/o Canon**
**Kabushiki Kaisha**
**30-2, 3-chome, Shimomaruko**
**Ohta-ku, Tokyo 146(JP)**
Inventor: **Matsumura, Susumu, c/o Canon**
**Kabushiki Kaisha**
**30-2, 3-chome, Shimomaruko**
**Ohta-ku, Tokyo 146(JP)**
Inventor: **Yoshinaga, Yoko, c/o Canon**
**Kabushiki Kaisha**

**30-2, 3-chome, Shimomaruko**
**Ohta-ku, Tokyo 146(JP)**
Inventor: **Kobayashi, Shin, c/o Canon**
**Kabushiki Kaisha**
**30-2, 3-chome, Shimomaruko**
**Ohta-ku, Tokyo 146(JP)**
Inventor: **Sudo, Toshiyuki, c/o Canon**
**Kabushiki Kaisha**
**30-2, 3-chome, Shimomaruko**
**Ohta-ku, Tokyo 146(JP)**
Inventor: **Morishima, Hideki, c/o Canon**
**Kabushiki Kaisha**
**30-2, 3-chome, Shimomaruko**
**Ohta-ku, Tokyo 146(JP)**
Inventor: **Kaneko, Tadashi, c/o Canon**
**Kabushiki Kaisha**
**30-2, 3-chome, Shimomaruko**
**Ohta-ku, Tokyo 146(JP)**

(74) Representative: **Tiedtke, Harro, Dipl.-Ing. et al**
**Patentanwaltsbüro**
**Tiedtke-Bühling-Kinne & Partner**
**Bavariaring 4**
**D-80336 München (DE)**

(54) **Hologram lens and display apparatus using the same.**

(57) This invention provides an off-axis type hologram lens and a display apparatus using the same, which can satisfactorily correct aberrations caused by an off-axis arrangement of a hologram lens and an eclipse of a displayed image by a pupil of an observer by properly setting an arrangement of the off-axis type hologram lens, so that image information from an image display and another image information are spatially superposed on each other, and the superposed images can be observed in an observation field at a uniform brightness.

FIG. 3

## BACKGROUND OF THE INVENTION

### Field of the Invention

The present invention relates to a hologram lens, a display apparatus using the same, and a method of manufacturing a hologram. The present invention is suitable for a case wherein a hologram lens is used as a light beam combining element, image information from an image display device and another image information such as a natural landscape in a forward view field (behind the hologram lens) are spatially superposed with each other, and the two pieces of image information are observed in a single same view field.

### Related Background Art

A display apparatus, which spatially superposes display information (image information) from a display element on image information of, e.g., a certain scene of an outer field in a single field using an optically transparent light beam combining element such as a multi-layered film reflection surface, a hologram optical element, or the like, and allows an observer to observe the superposed images, is normally called a head-up display apparatus, and is utilized in various fields.

In order to make optical device components of the head-up display apparatus compact, a display apparatus, in which the beam combining element is arranged at a position relatively near the eyes of an observer, and the optical device is mounted on a helmet, is called a helmet mount display apparatus (HMD apparatus), and various applications such as a display apparatus used upon piloting of an aircraft, a display apparatus for an amusement use such as games or for an artificial reality use, and the like have been proposed.

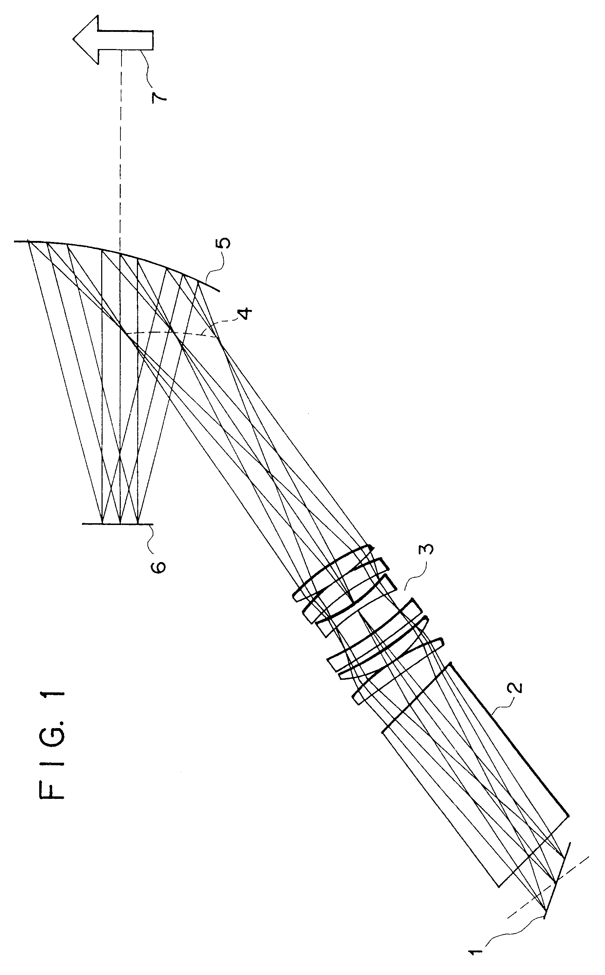

Fig. 1 is a schematic view showing an optical path of an HMD apparatus as a conventional display apparatus.

Display light emerging from an image display surface 1 of a CRT (not shown) is transmitted through a prism system 2, and is incident on a relay lens 3. The relay lens 3 images the display light on an intermediate imaging surface 4 near a hologram combiner 5 formed on a visor (not shown) having a proper curvature. The display light converted into diverging light from the intermediate imaging point is converted into a substantially parallel beam by the hologram combiner 5 having a lens effect, and the parallel light is incident on a pupil 6 of an observer. Therefore, the observer can observe an image (virtual image) of the CRT, which image is imaged at an infinity, and is superposed on a forward landscape 7.

In this display apparatus, since the hologram combiner 5 has a large off-axis arrangement, it causes complicated aberrations. For this reason, in this prior art, the prism system 2 and the image display surface 1 of the CRT are obliquely arranged to correct the aberrations caused by the hologram combiner 5.

In general, a hologram is used as various optical devices as an optical element since it is compact and lightweight, and allows easy mass-production by a copy method.

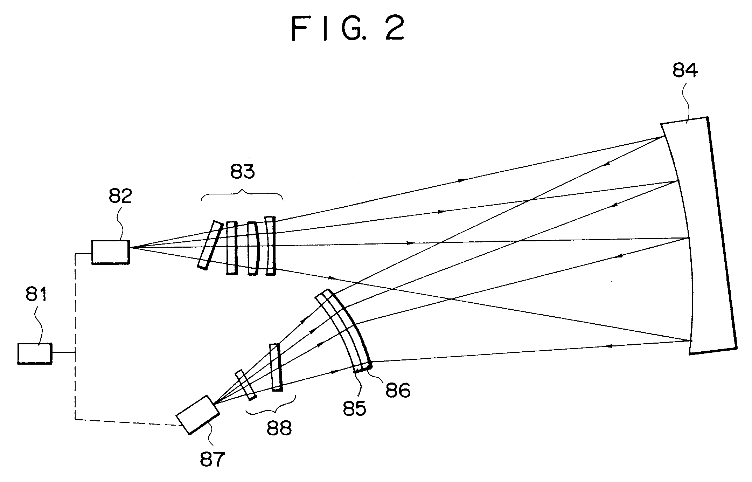

Fig. 2 is a schematic view showing a method of manufacturing a hologram as a conventional combiner element.

In Fig. 2, coherent light from an argon laser 81 is split into two beams. One beam is diverged by a microscope objective lens 82, and is subjected to required corrections of a spherical aberration, astigmatism, and coma by an aberration correction lens system 83. Thereafter, the beam is reflected by a concave mirror 84 to be converted into convergent light, and the light is incident on a hologram recording material 86 on a transparent substrate 85.

On the other hand, the other beam obtained by splitting light from the argon laser 81 is diverged by a microscope objective lens 87, and is subjected to predetermined corrections of an astigmatism and coma by an aberration correction lens system 88. Thereafter, the beam is transmitted through the transparent substrate 85, and is incident on the hologram recording material 86.

The above-mentioned two beams interfere with each other in the hologram recording material 86 to form a volume phase diffraction grating. The hologram recording material 86 is developed to manufacture a hologram. As the hologram recording material 86, dichromated gelatin, polyvinyl carbazole or photopolymer is used.

The display apparatus shown in Fig. 1 uses a curved surface hologram combiner which is not easy to manufacture, and a complicated and heavy relay optical system, and tends to disturb mass-production and a lightweight, compact structure. In order to widen the observation view field, the size of the hologram combiner must be increased, and the aberration amount of the hologram combiner is undesirably increased accordingly.

Various aberrations caused by the hologram combiner are corrected by inclining the prism system or decentering some lenses constituting the relay lens. For this reason, the entire apparatus is complicated, and requires a high assembling precision.

U.S. Patent Nos. 3,807,829 and 3,915,548 disclose techniques associated with a head-up display apparatus which widens the observation view field using a hologram lens array.

In the above-mentioned two references, a hologram lens is designed and manufactured while being divided into some elementary holograms so as to improve the aberration characteristics in units of divided regions, thereby widening the observation view field in a display apparatus using this hologram lens as a combiner.

However, these references do not clearly describe a method of determining the sizes of elementary holograms in the hologram lens array.

For example, if the sizes of all the elementary holograms are designed to be equal to each other or are determined regardless of the pupil position of an observer, the size of a beam spot incident on the pupil varies depending on the diffraction position on the hologram lens array (a predetermined exit pupil cannot be provided). For this reason, when such a hologram lens array is used as a combiner of a display apparatus such as a head-up display, a virtual image superposed via the combiner is eclipsed by the pupil of an observer.

On the other hand, in the hologram manufacturing device shown in Fig. 2, a recording optical system needs a very large number of parts, and it is difficult to arrange all these optical elements at required positions.

In particular, since a cylindrical lens, a plane-parallel mirror, and the like are arranged to be offset from the optical axis, a special-purpose jig is required for arranging these optical elements. In order to manufacture a hologram optical element having a predetermined size, an optical system having an extremely large aperture is necessary.

For example, when a hologram optical element having a diameter of 200 mm is to be manufactured, the reflection mirror 84 must have a diameter of 400 mm or more, and as a result, the recording optical system becomes very expensive.

Interference fringes recorded on the hologram recording material 86 preferably have a pitch of about 0.15 $\mu$m, and a vibration during exposure is preferably equal to or smaller than 0.01 $\mu$m. For this purpose, a compact recording optical system having a high rigidity must be prepared, and it is difficult for the large-scale optical system shown in Fig. 2 to manufacture a high-precision hologram.

In addition, in the conventional HMD apparatus, an on-axis coma of the hologram combiner is corrected by inclining the prism system. However, the hologram combiner causes many astigmatism in addition to the coma.

For example, in a hologram combiner in which a divergent light source point of a hologram recording beam is placed near the pupil position (entrance pupil) of an observer, and light emitted therefrom is caused to interfere with the other recording beam converging near the exit pupil, an astigmatic difference on the imaging surface is about 13 mm on the optical axis, and is about 5 to 15 mm at a field angle of ±20°. For this reason, it is very difficult to observe image information well.

## SUMMARY OF THE INVENTION

It is the first object of the present invention to provide an off-axis type hologram lens and a display apparatus using the same, which can satisfactorily correct aberrations caused by an off-axis arrangement of a hologram lens and an eclipse of a displayed image by a pupil of an observer by properly setting an arrangement of the off-axis type hologram lens, so that image information from an image display and another image information are spatially superposed on each other, and the superposed images can be observed in an observation field at a uniform brightness.

It is the second object of the present invention to provide a hologram lens and a display apparatus using the same, wherein when image information from an image display and another image information are spatially superposed on each other via a hologram combiner, and the superposed images are observed in a single same view field, a prism is arranged in the optical path between the image display and the hologram combiner, thereby satisfactorily correcting a coma and an astigmatism, and allowing satisfactory observation of image information.

It is the third object of the present invention to provide a method of manufacturing a hologram and a display apparatus using the hologram, wherein a high-precision hologram can be manufactured while making the entire apparatus compact and simple, and when the hologram is used as a combiner, image information from an image display and another information can be spatially superposed on each other, and the superposed images can be satisfactorily observed in a single same view field.

According to the present invention, an off-axis type hologram lens is characterized in that the hologram lens is divided into a plurality of elementary holograms, and the sizes of the respective divided elementary holograms are determined so that the elementary holograms have an equal N.A.

According to the present invention, an off-axis type hologram lens is also characterized in that the hologram lens is divided into a plurality of elementary holograms, and each elementary hologram has a size obtained when an imaginary aperture is projected onto the hologram lens surface at a predetermined angle.

A display apparatus using a hologram lens of the present invention is characterized in that a light beam based on image information from an image display is diffracted in a predetermined direction via an off-axis type hologram lens consisting of a plurality elementary holograms having an equal N.A so as to be spatially superposed on image information behind the hologram lens, and the superposed images are observed in a single same view field.

Also, the display apparatus is characterized in that when a light beam based on image information from the image display is diffracted via the hologram lens to be spatially superposed on image information behind the hologram lens, and the superposed images are observed in a single same view field, a prism is arranged in the optical path between the image display and the hologram lens.

Furthermore, the display apparatus is characterized in that when a light beam based on image information from the image display is diffracted in a predetermined direction via the off-axis type hologram lens consisting of a plurality of elementary holograms to be spatially superposed on image information behind the hologram lens, and the superposed images are observed in a single view field, each elementary hologram has a size obtained when an imaginary aperture is projected onto the hologram lens surface at a predetermined angle.

A method of manufacturing a hologram according to the present invention is characterized in that when a hologram is manufactured by causing object light and reference light to be incident on a recording medium from different directions and forming interference fringes on the recording medium, at least one of an optical system for generating the object light and an optical system for generating the reference light includes a cylindrical lens and a computer generated hologram.

## BRIEF DESCRIPTION OF THE DRAWINGS

Fig. 1 is a schematic diagram showing main part of a display apparatus using a conventional hologram lens;

Fig. 2 is a schematic diagram showing main part of a conventional method of manufacturing a hologram;

Fig. 3 is a schematic diagram showing an embodiment of a hologram lens according to the present invention;

Fig. 4 is a schematic diagram showing a display apparatus according to an embodiment of the present invention;

Fig. 5 is a schematic view showing another embodiment of a hologram lens according to the present invention;

Fig. 6 is a schematic diagram showing main part of a method of manufacturing a hologram lens according to the present invention;

Fig. 7 is a schematic view showing main part of a method of manufacturing a hologram lens according to the present invention;

Fig. 8 is a schematic view showing main part of a method of manufacturing a hologram lens according to the present invention;

Fig. 9 is a schematic diagram showing still another embodiment of a hologram lens according to the present invention;

Fig. 10 is a schematic view showing still another embodiment of a hologram lens according to the present invention;

Fig. 11 is a schematic diagram showing still another embodiment of a hologram lens according to the present invention;

Fig. 12 is a schematic diagram showing another embodiment of a display apparatus according to the present invention;

Fig. 13 is a schematic diagram showing still another embodiment of a display apparatus according to the present invention;

Fig. 14 is a schematic diagram showing an embodiment of a method of manufacturing a hologram lens according to the present invention;

Figs. 15A and 15B are schematic views showing another embodiment of a method of manufacturing a hologram lens according to the present invention;

Fig. 16 is a schematic diagram showing an embodiment wherein a hologram lens manufactured by the manufacturing method of the present invention is applied to a display apparatus;

Fig. 17 is a schematic diagram showing still another embodiment of a display apparatus according to the present invention;

Fig. 18 is a schematic diagram showing still another embodiment of a display apparatus according to the present invention; and

Fig. 19 is a schematic diagram showing still another embodiment of a display apparatus according to the present invention.

## DETAILED DESCRIPTION OF THE PREFERRED EMBODIMENTS

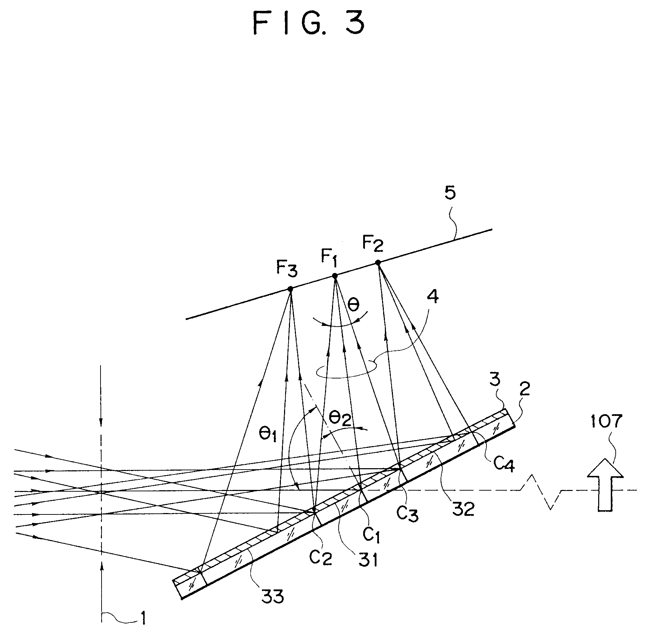

Fig. 3 is a schematic diagram showing main part of an embodiment of a hologram lens according to the present invention.

In this embodiment, an off-axis type hologram lens 3 comprises a hologram lens array having three elementary holograms 31, 32, and 33. The hologram lens 3 is formed on a substrate 2. An aperture surface 1 corresponds to a pupil of an observer in a case that the hologram lens is applied to a display apparatus. An image surface 5 corresponds to the image generation position of an image display when the hologram lens is applied to a display apparatus. Another image information 107 such as a natural landscape is spatially superposed on image information generated on the image surface 5 via the hologram lens 3, and the superposed images are observed in a single same view field.

The optical characteristics obtained when the hologram lens array 3 is constituted by three elementary holograms in the vertical direction will be explained below.

First, an on-axis beam will be described below. In Fig. 3, a light beam is incident from the aperture surface 1 to the hologram lens array 3 on the substrate 2 at an incident angle $\theta_1$. The elementary hologram 31 reflectively and diffracts an on-axis beam of the incident light beam as a light beam 4 at an angle $\theta_2$. At this time, the elementary hologram 31 is designed to satisfy a Bragg condition for only a light beam incident at the incident angle $\theta_1$. The elementary hologram 31 converts such a light beam into a convergent light beam 4, and focuses the converted light beam at an imaging point F1 on the image surface 5.

The light beam from the aperture surface 1 is also incident on the remaining elementary holograms 32 and 33 of the hologram lens array 3 at the same incident angle $\theta_1$. However these elementary holograms 32 and 33 do not satisfy the Bragg condition at the incident angle $\theta_1$, and do not have a predetermined diffraction efficiency. In this embodiment, only the on-axis light beam is diffracted by the elementary hologram 31, and is focused at the imaging point F1.

On the other hand, only the elementary hologram 32 satisfies the Bragg condition of a light beam which is incident on the hologram lens array 3 at a field angle $\theta_1 + w$, and focuses such a light beam at an imaging point F2. Similarly, a light beam incident at a field angle $\theta_1 - w$ is focused at an imaging point F3 by the elementary hologram 3'.

In this embodiment, the center wavelength of a light beam imaged by the hologram lens array 3 is set to be 530 mm, the incident angle $\theta_1$ of light incident at a center C1 of the hologram lens array 3 is set to be 60°, the diffraction angle $\theta_2$ is set to be 20°, and a focal length $f_{31}$ of the elementary hologram 31 is set to be 50 mm. The grating constant at the center C1 of the elementary hologram 31 is a longitudinal grating pitch $P_{C1}$ = 1.011 $\mu$m.

Furthermore, the beam diameter of the on-axis light beam with which the elementary hologram 31 satisfies the Bragg condition is set to be 10 mm. At a lowermost end point C2 of the elementary hologram 31, a longitudinal grating pitch $P_{C2}$ = 1.4466 $\mu$m, and the diffraction angle is 29.98°. At an uppermost end point C3, a longitudinal grating pitch $P_{C3}$ = 0.7396 $\mu$m, and the diffraction angle is set to be 8.59°. The elementary hologram 31 is divided to have a numerical aperture (N.A) = 0.36, and its size is set to be 20 mm.

The elementary hologram 32 for focusing light at the imaging point F2 on the imaging surface 5 will be described below. For the sake of simplicity, the following description will be made under an assumption that the elementary hologram 32 corresponds to a field angle $+ w$ = 10°. Note that this field angle w is properly changed depending on the specification of the off-axis type hologram lens array 3.

In this embodiment, the elementary hologram 32 is set to have a focal length $f_{32}$ = 45 mm and N.A = 0.36. At this time, the uppermost end point C3 of the elementary hologram 31 also corresponds to the lowermost end point of the elementary hologram 32. Since the longitudinal grating pitch $P_{C3}$ at this point C3 is 0.7396 $\mu$m, a light beam incident on this point C3 at the field angle $+ w$ = 10°, i.e., an incident angle of 70°, is diffracted at a diffraction angle of 12.89°.

Also, since the N.A of the elementary hologram 32 is set to be 0.36, a longitudinal grating pitch $P_{C4}$ = 0.4874 $\mu$m and the diffraction angle = -8.49° (the "-" sign indicates that diffracted light is included in a quadrant where an incident light beam from a normal plane is present) are set at an uppermost end point C4 of the elementary hologram 32.

Thus, in this embodiment, the elementary hologram 32 is divided to have a size of about 17 mm. Similarly, the elementary hologram 33 used at a field angle $-w$ = -10° is set to have a focal length $f_{33}$ = 60 mm and N.A = 0.36, and is divided to have a size of about 30 mm.

The method of dividing the hologram lens array in the vertical direction according to the present invention has been described. In this embodiment, the hologram lens array is similarly divided in the horizontal direction to have a constant N.A.

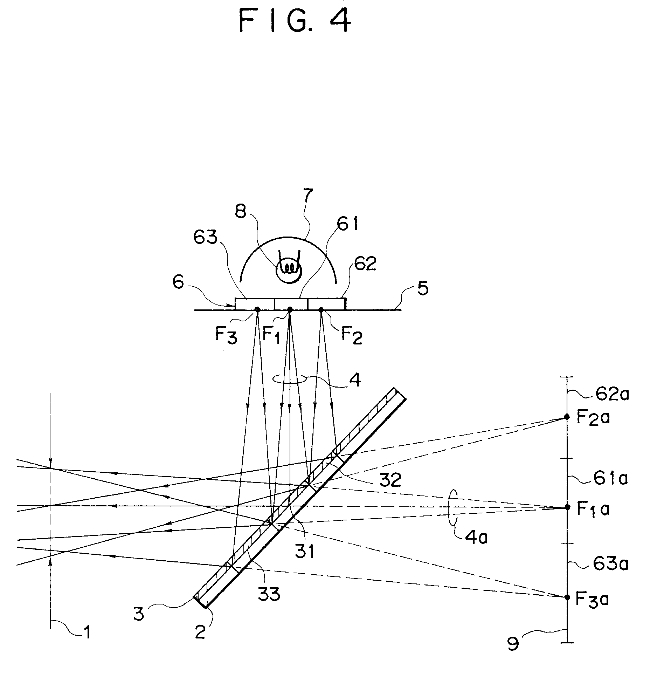

Fig. 4 is a schematic diagram showing an embodiment wherein the hologram lens 3 shown in Fig. 3 is applied to a helmet mounted display (HMD) apparatus as a light beam combining element. The same reference numerals in Fig. 4 denote the same parts as in Fig. 3.

In this embodiment, a light beam emitted from a light source 8 such as a halogen lamp is converted into substantially parallel light by a lamp house 7 having a proper shape, and illuminates a liquid crystal display element 6 as image information of an image display. A light beam 4 emitted from image information at a point F1 on a display surface 5 of the liquid crystal display element 6 is incident on the hologram lens array 3 formed on the transparent substrate 2 consisting of glass, plastic, or the like.

The hologram lens array 3 has the elementary hologram 31 which satisfies the Bragg condition for only the light beam 4. The light beam 4 is reflectively diffracted by only the elementary hologram 31, and is incident on a pupil 1 of an observer. At this time, the elementary hologram 31 has a lens effect for converting the light beam 4 into a slightly divergent light beam. The observer observes the image information at the point F1 on the display surface 5 as a virtual image based on a light beam 4a diverging from a point F1a in front of the hologram lens array 3.

For the same reason as described above, light beams emitted from image information at points F2 and F3 on the display surface 5 of the liquid crystal display element 6 are respectively diffracted by only the elementary holograms 32 and 33 in the direction of the pupil 1 of the observer. Thus, the observer observes the image information at the points F2 and F3 as virtual images based on the light beams diverging from points F2a and F3a in front of the hologram lens array 3.

As described above, the points on the display surface 5 of the liquid crystal display element 6 are reflectively and diffracted by the elementary holograms 31, 32, and 33 to form a virtual image plane 9.

In the present invention, even when a white light source is used, since each elementary hologram has a wavelength selectivity (wavelength dependency of the diffraction efficiency), it has a peak of the diffraction efficiency in a light beam having a center wavelength $\lambda_0$ satisfying the Bragg condition. If the half-width at this time is represented by $2\Delta\lambda$, the elementary hologram exhibits a diffraction effect for only white light beam components falling within a wavelength range from $\lambda_0 - \Delta\lambda$ to $\lambda_0 + \Delta\lambda$. For this reason, in this embodiment, the halogen lamp is used as the light source.

Of course, an interference filter which transmits only light beam components in a required wavelength range of the light beam from the halogen lamp may be used. In this embodiment, the elementary holograms 31, 32, and 33 respectively have satisfactorily aberration-corrected regions 61, 62, and 63, and points on the virtual image plane 9 defined by regions 61a, 62a, and 63a can be observed as point images almost free from aberrations.

In this embodiment, the HMD apparatus is constituted using the reflection off-axis type hologram lens array. The HMD apparatus may be similarly constituted using a transmission off-axis type hologram lens array.

Furthermore, in this embodiment, the image surface of the hologram lens array 3 coincides with the display surface 5 of the liquid crystal display element 6. Alternatively, the display surface of a CRT or a liquid crystal display element may be converted by a relay lens into an intermediate imaging surface of a relay lens, so that the intermediate imaging surface coincides with the display surface 5 (the object surface of the hologram lens array) of this embodiment.

Also, the display apparatus may be constituted using a cold mirror, an infrared cut filter, and the like for cutting unnecessary wavelength light, as needed.

In this embodiment, the display apparatus is constituted using the hologram lens array having a diffraction efficiency for only one wavelength light. Alternatively, a similar display apparatus may be constituted by combining hologram lens arrays whose diffraction center wavelengths respectively correspond to red, blue, and green. With this apparatus, a multi-color display or a full-color display can be performed.

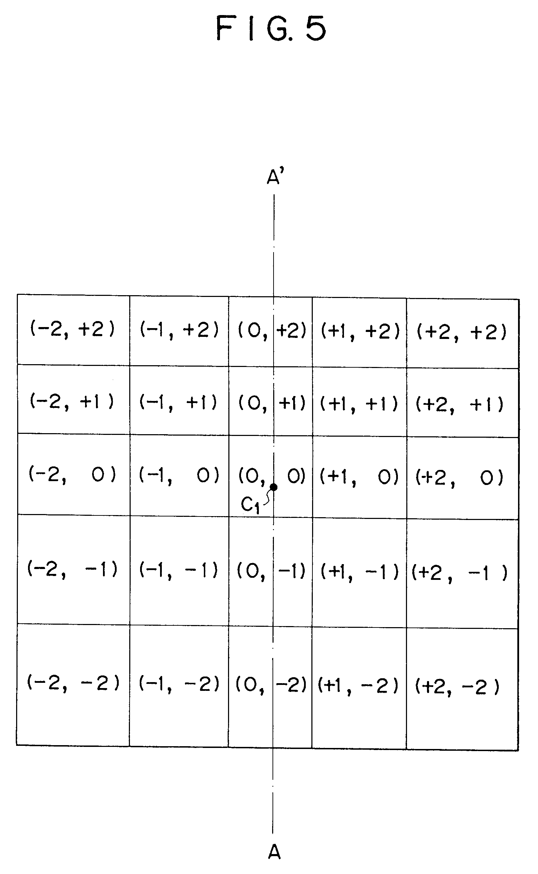

Fig. 5 is a schematic view showing another embodiment of a hologram lens according to the present invention.

In this embodiment, a hologram lens array is constituted by 5 × 5 elementary holograms.

In Fig. 5, elementary holograms (i, j) (i, j = -2 to 2) respectively represent numbers of field angles in the vertical and horizontal directions with respect to an elementary hologram (0, 0) for an on-axis light beam including a point C1 serving as an optical axis. For example, an elementary hologram (i, j) = (2, 2) is effective for an incident light beam having a field angle $+w = +20°$ in the vertical direction, and a field angle $+w = +20°$ in the horizontal direction, and an elementary hologram (i, j) = (-1, +1) is effective for an incident light beam having a field angle of -10° in the vertical direction and a field angle of +10° in the horizontal direction.

As described above, as for the vertical direction, the divided size of an elementary hologram becomes smaller as the field angle w has a "+" sign and becomes larger.

However, as for the horizontal direction, since the elementary holograms are symmetrical about a line A-A' passing the point C1 of the elementary hologram (0, 0), the divided sizes of elementary holograms corresponding to field angles having equal absolute values of w are equal to each other. More specifically, each elementary hologram having i = 0 has a minimum divided size.

In this embodiment, the sizes and optical effects of the elementary holograms are specified in this manner, so that the elementary holograms have a constant N.A, thus allowing observation of image information at a uniform brightness.

Note that the number of elementary holograms constituting the hologram lens array is not particularly limited as long as adjacent elementary holograms have an equal longitudinal grating pitch at their boundary, the incident angle and the diffraction angle are connected to satisfy a grating formula. And if each elementary hologram satisfies the Bragg condition for only a light beam having a field angle that utilizes the corresponding elementary hologram, any number of hologram can be provided.

In each of the above embodiments, the reflection off-axis type hologram lens array has been described. However, the present invention can also be applied to a transmission off-axis type hologram lens array.

A method of manufacturing an off-axis type hologram lens array according to the present invention will be described below with reference to the elementary hologram 31 shown in Fig. 3. Note that other elementary holograms can be manufactured by basically the same manufacturing method.

As shown in Fig. 3, the elementary hologram 31 has, at the point C1 on the hologram surface, a grating constant yielding a longitudinal grating pitch $P_{C1}$ = 1.011 $\mu$m, a grating inclination angle $\phi_{C1}$ = 11.04°, and a grating interval $d_{C1}$ = 0.1937 $\mu$m.

The hologram 31 has, at the point C2, a grating constant yielding $P_{C2}$ = 1.2375 $\mu$m, $\phi_{C2}$ = 9.15°, and $d_{C2}$ = 0.1968 $\mu$m, and has, at the point C3, a grating constant yielding $P_{C3}$ = 0.8390 $\mu$m, $\phi_{C3}$ = 13.14°, and $d_{C3}$ = 0.1907 $\mu$m.

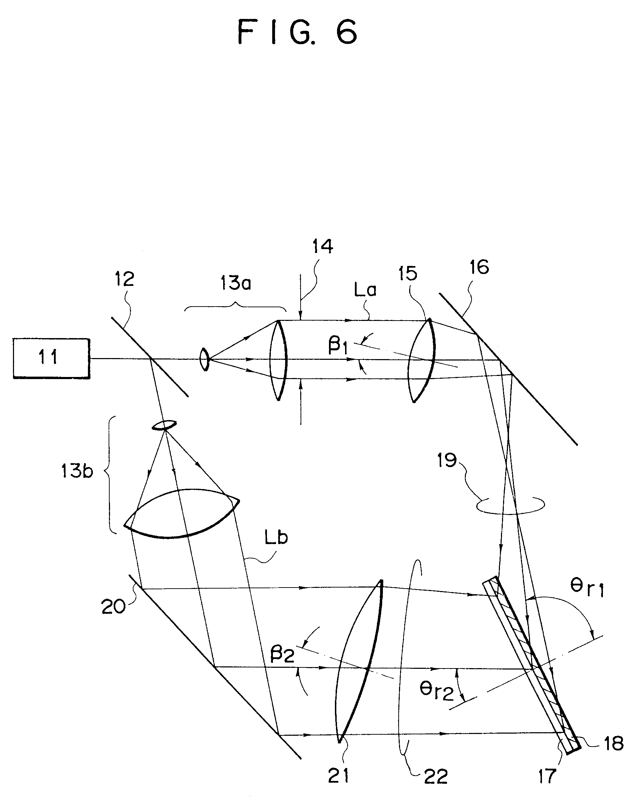

A method of recording the elementary hologram having these grating constants on a photosensitive material with a refractive index of 1.5 using an argon ion laser having a recording wavelength of 514.5 nm by an apparatus shown in Fig. 6 will be described below.

In Fig. 6, a laser beam having a wavelength of 514.5 nm emitted from an argon ion laser 11 is split into two beams by a half mirror 12, and these beams are collimated into parallel beams by collimator lens systems 13a and 13b.

Of these two beams, one parallel beam La is incident on a lens system 15, which is inclined at an angle $\beta$1 with respect to the optical axis, and is reflected by a mirror 16. A beam 19 reflected by the mirror 16 is incident on a photosensitive material 18 coated or adhered on a transparent substrate 17. The incident beam 19 is an off-axis light beam of the field angle $\beta$1 of the lens system 15, and generates counter-aberrations for correcting aberrations caused by the off-axis arrangement of the off-axis type hologram lens, aberrations caused by a wavelength difference between a wavelength (530 nm in this embodiment) in use (reconstruction) and a recording wavelength (514.5 nm), and the like.

The other parallel beam Lb is reflected by a mirror 20, and is incident on the photosensitive material 18 as a convergent beam 22 including aberrations by a lens system 21 inclined at an angle $\beta$2 with respect to the optical axis.

These beams 19 and 22 are respectively incident on the photosensitive material 18 at incident angles $\theta_{r1}$ and $\theta_{r2}$ from opposite sides, thereby recording a reflection type hologram.

As the recording material 18 used in this embodiment, various materials such as dichromated gelatin, a photopolymer, a silver salt photosensitive material, and the like can be used. In the embodiment shown in Fig. 6, a photopolymer is used.

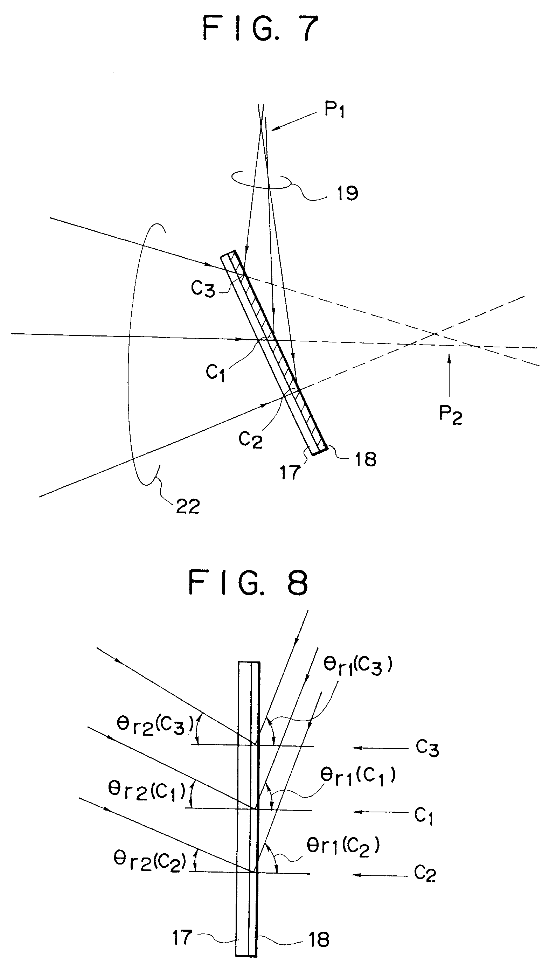

Fig. 7 is an enlarged explanatory view of the two beams 19 and 22 incident on the photosensitive material 18 in the recording optical system shown in Fig. 6.

Fig. 8 is an explanatory view showing the incident angles of the recording laser beam at the points C1, C2, and C3 on the surface of the elementary hologram 31.

In Fig. 8, $\theta_{r1}$(C1) = 69.88° and $\theta_{r2}$(C1) = 25.49° at the point C1, $\theta_{r1}$(C2) = 70.95° and $\theta_{r2}$(C2) = 19.39° at the point C2, and $\theta_{r1}$(C3) = 69.02° and $\theta_{r2}$(C3) = 31.20° at the point C3. The distance from the point C1 to a primary imaging point P1 of the beam 19 is about 600 nm, and the distance from the point C1 to an imaging point P2 of the beam 22 is about 88 mm.

As described above, the size (the length from the point C2 to the point C3) of the elementary hologram 31 is 20 mm. Since the distance between the lens system 21 and the photosensitive material 18 is set to be 50 mm, the lens diameter of the lens system 21 is about 30 mm.

According to the present invention, the elementary holograms are recorded by a means such as a step & repeat technique using the above-mentioned method, thereby manufacturing the hologram lens array. At this time, when another elementary hologram is recorded, the incident angles of the beams at the center of each hologram are determined by rotating the mirrors 16 and 20. The incident beams 19 and 22 are limited using a mask (not shown) or a spatial optical modulator (not shown) in accordance with the size of each elementary hologram.

In this embodiment, the method of recording an elementary hologram using aberration beams based on off-axis beams formed by the rotation-symmetrical lens systems is used. Alternatively, a recording optical system such as a lens system including a cylindrical lens and a decentered lens may be used.

The parallel beams are incident on the lens systems 15 and 21 for generating aberrations. In place of the collimator lens systems 13a and 13b of this embodiment, the laser beam may be converted into divergent beams using concave or convex lenses, microscope objective lenses, and the like, and the lens systems 15 and 21 may be constituted as finite imaging systems.

As described above, in each of the above embodiments, an off-axis type hologram lens array having a uniform brightness over the entire surfaces of the holograms and a wide field angle range is constituted by setting the sizes of the elementary holograms to have an equal N.A.

Also, a large-screen display apparatus free from luminance nonuniformity when image information light from a CRT or a liquid crystal display element is reflectively diffracted toward the pupil of an observer using the off-axis type hologram lens array to allow the observer to observe the image information, is realized.

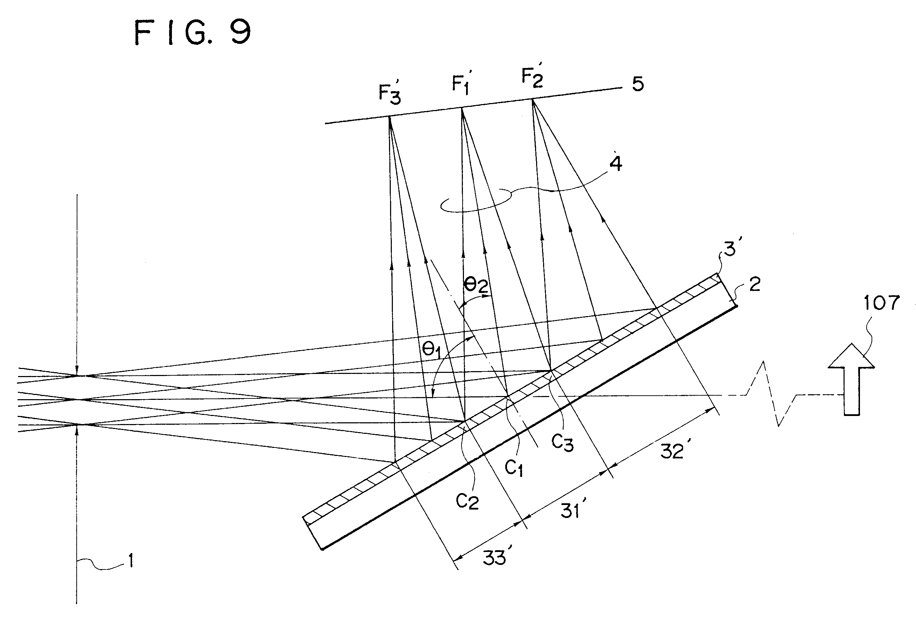

Fig. 9 is a schematic diagram showing main part of another embodiment of a hologram lens according to the present invention. Fig. 9 illustrates an off-axis type hologram lens 3'.

In this embodiment, the off-axis type hologram lens 3' comprises a hologram lens array having three elementary holograms 31', 32', and 33'. The hologram lens 3 is formed on a substrate 2. An aperture surface 1 corresponds to a pupil of an observer when the hologram lens is applied to a display apparatus. An image surface 5 corresponds to the image information position of an image display when the hologram lens is applied to a display apparatus.

Another image information 107 such as a natural landscape is spatially superposed on image information generated on the image surface 5 via the hologram lens 3', and the superposed images are observed in a single view field.

The optical characteristics obtained when the hologram lens array 3' is constituted by the three elementary holograms 31', 32', and 33' will be described below.

First, an on-axis beam will be described below. In Fig. 9, a monochrome light beam having a wavelength $\lambda$ is incident from the imaginary aperture surface 1 on the hologram lens array 3' on the substrate 2 at an incident angle $\theta_1$.

The elementary hologram 31' reflects and diffracts an on-axis beam of the incident light beam as a light beam 4 at an angle $\theta_2$. At this time, the elementary hologram 31' is designed to satisfy a Bragg condition for only a light beam having the wavelength $\lambda$ incident at the incident angle $\theta_1$. The elementary hologram 31' converts such a light beam into a convergent light beam 4, and focuses the converted light beam at an imaging point F1 on the image surface 5.

The light beam from the imaginary aperture surface 1 is also incident on the remaining elementary holograms 32' and 33' of the hologram lens array 3' at the same incident angle $\theta_1$. However, these elementary holograms 32' and 33' do not satisfy the Bragg condition at the incident angle $\theta_1$, and do not have a predetermined diffraction efficiency.

In this embodiment, only the on-axis light beam is diffracted by the elementary hologram 31', and is focused at the imaging point F1'.

On the other hand, only the elementary hologram 32' satisfies the Bragg condition of a light beam which is incident on the hologram lens array 3' at a field angle $\theta_1 + w$, and focuses such a light beam at an imaging point F2'. Similarly, a light beam incident at a field angle $\theta_1$-w is focused at an imaging point F3' by the elementary hologram.

In this embodiment, the center wavelength of a light beam imaged by the hologram lens array 3' is set to be 530 mm, the aperture diameter of the imaginary aperture 1 is set to be 10 mm, the incident angle $\theta_1$ of light incident at a center C1 of the hologram lens array 3' is set to be 60°, the diffraction angle $\theta_2$ is set to be 20°, and a focal length $f_{31}$' of the elementary hologram 31' is set to be 50 mm.

The distance from the center C1 of the elementary hologram 31' to the center of the imaginary aperture 1 is also set to be 50 mm. The elementary holograms 31', 32', and 33' are divided into sizes corresponding to those of incident light beams at corresponding field angles on the hologram surfaces when the diameter of the imaginary aperture 1 is fixed.

More specifically, if the incident angle of an on-axis light beam onto the center C1 of the hologram is represented by $\theta i$, the field angle is represented by $\omega i$, and the diameter of the imaginary aperture 1 is represented by a, a size H of the incident light beam on the hologram surface is given by H = a/cos($\theta i + \omega i$). For this reason, if the field angles are -10°, 0°, and 10°, the sizes, in the meridional direction, of the elementary holograms 31', 32', and 33' are respectively 20.0 mm, 29.24 mm, and 15.56 mm.

According to the present invention, since the sizes of the elementary holograms are set, as described above, parallel beams incident on the hologram lens array 3' from an aperture having the same position and the same diameter as those of the imaginary aperture 1 at field angles within a predetermined range can form the imaging surface 5 having a uniform brightness.

At the same time, the image surface 5 defined by the points F1', F2', F3', and the like is imaged as a virtual image plane 107 by the hologram lens array 3'. When an observer sets his or her pupil at the position of the imaginary aperture 1, he or she can observe a virtual image free from an eclipse.

The method of dividing the hologram lens array in the vertical direction according to the present invention has been described. In this embodiment, the hologram lens array is similarly divided in the horizontal direction to have sizes corresponding to those of incident light beams passing the imaginary aperture having a predetermined diameter, and having corresponding field angles on the hologram surfaces.

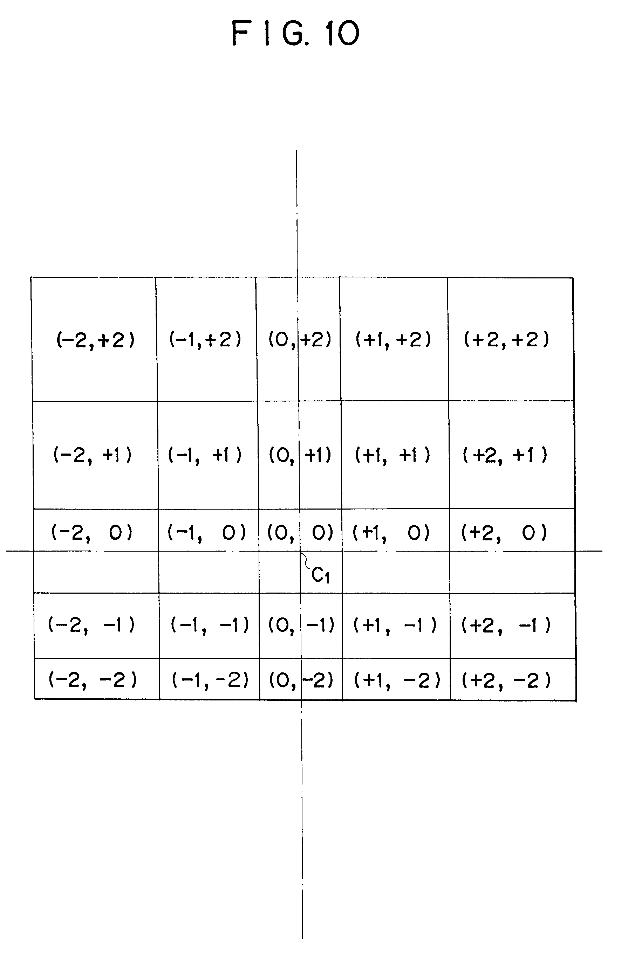

Fig. 10 is a schematic view showing still another embodiment of a hologram lens according to the present invention. In this embodiment, a hologram lens array is constituted by 5 × 5 elementary holograms.

In Fig. 10, elementary holograms (i, j) (i, j = -2 to 2) respectively represent numbers of field angles $\omega$ given by $\omega$ = 10 × i° in the vertical direction and $\omega$ = 10 × j° in the horizontal direction with respect to an elementary hologram (0, 0) for an on-axis light beam including a point C1 serving as an optical axis. For example, an elementary hologram (i, j) = (2, 2) is effective for an incident light beam having a field angle +$\omega$ = +20° in the vertical direction, and a field angle +$\omega$ = +20° in the horizontal direction, and an elementary hologram (i, j) = (-1, +1) is effective for an incident light beam having a field angle of -10° in the vertical direction and a field angle of +10° in the horizontal direction.

As described above, since the sizes of the elementary holograms correspond to the sizes of incident light beams on the corresponding hologram surfaces, the horizontal sizes of the elementary holograms increase as the field angles in both the + and - directions increase, and the vertical sizes of the elementary holograms increase in correspondence with the field angles in the + direction; they decrease in correspondence with the field angles in the - direction.

Note that the number of elementary holograms constituting the hologram lens array is not particularly limited as long as adjacent elementary holograms have an equal longitudinal grating pitch at their boundary, the incident angle and the diffraction angle are connected to satisfy a grating formula, and each elementary hologram satisfies the Bragg condition for only a light beam having a field angle that utilizes the corresponding elementary hologram.

In each of the above embodiments, the reflection off-axis type hologram lens array has been described. However, the present invention can also be applied to a transmission off-axis type hologram lens array.

A method of manufacturing an off-axis type hologram lens array according to the present invention will be described below with reference to the elementary hologram 31' shown in Fig. 9. Note that other elementary holograms can be manufactured by basically the same manufacturing method.

As shown in Fig. 9, the elementary hologram 31' has, at the point C1 on the hologram surface, a grating constant yielding a longitudinal grating pitch

$P_{C1}$ = 1.011 $\mu$m, a grating inclination angle $\phi_{C1}$ = 11.042°, and a grating interval $d_{C1}$ = 0.1937 $\mu$m.

The hologram 31' has, at the point C2, a grating constant yielding $P_{C2}$ = 1.446 $\mu$m, $\phi_{C2}$ = 7.906°, and $d_{C2}$ = 0.199 $\mu$m, and has, at the point C3, a grating constant yielding $P_{C3}$ = 0.522 $\mu$m, $\phi_{C3}$ = 20.487°, and $d_{C3}$ = 0.183 $\mu$m.

A method of recording the elementary hologram having these grating constants on a photosensitive material having a refractive index of 1.5 using an argon ion laser having a recording wavelength of 514.5 nm by the apparatus shown in Fig. 6 will be described below.

In Fig. 6, a laser beam having a wavelength of 514.5 nm emitted from the argon ion laser 11 is split into two beams by the half mirror 12, and these beams are collimated into parallel beams by the collimator lens systems 13a and 13b.

Of these two beams, one parallel beam La is incident on the lens system 15, which is inclined at an angle $\beta$1 with respect to the optical axis, and is reflected by the mirror 16. A beam 19 reflected by the mirror 16 is incident on the photosensitive material 18 coated or adhered on the transparent substrate 17. The incident beam 19 is an off-axis light beam of the field angle $\beta$1 of the lens system 15, and generates counter-aberrations for correcting aberrations caused by the off-axis arrangement of the off-axis type hologram lens, aberrations caused by a wavelength difference between a wavelength (530 nm in this embodiment) in use (reconstruction) and a recording wavelength (514.5 nm), and the like.

The other parallel beam Lb is reflected by the mirror 20, and is incident on the photosensitive material 18 as a convergent beam 22 including aberrations by the lens system 21 inclined at an angle $\beta$2 with respect to the optical axis.

These beams 19 and 22 are respectively incident on the photosensitive material 18 at incident angles $\theta_{r1}$ and $\theta_{r2}$ from opposite sides, thereby recording a reflection type hologram.

As the recording material 18 used in this embodiment, various materials such as dichromated gelatin, a photopolymer, a silver salt photosensitive material, and the like can be used. In the embodiment shown in Fig. 6, a photopolymer is used.

Fig. 7 is an enlarged explanatory view of the two beams 19 and 22 incident on the photosensitive material 18 in the recording optical system shown in Fig. 6.

Fig. 8 is an explanatory view showing the incident angles of the recording laser beam at the points C1, C2, and C3 on the surface of the elementary hologram 31.

In Fig. 8, $\theta_{r1}(C1)$ = 69.72° and $\theta_{r2}(C1)$ = 25.41° at the point C1, $\theta_{r1}(C2)$ = 68.48° and $\theta_{r2}(C2)$ = 35.06° at the point C2, and $\theta_{r1}(C3)$ =

77.75° and $\theta_{r2}$(C3) = -0.48° at the point C3. The light beams 19 and 22 incident at these angles are realized by the optical systems arranged along the optical paths of these light beams.

According to the present invention, the elementary holograms are recorded by a means such as a step & repeat technique using the above-mentioned method, thereby manufacturing the hologram lens array.

At this time, when another elementary hologram is recorded, the incident angles of the beams at the center of each hologram are determined by rotating the mirrors 16 and 20. The incident beams 19 and 22 are limited using a mask (not shown) or a spatial optical modulator (not shown) in accordance with the size of each elementary hologram.

In this embodiment, the method of recording an elementary hologram using aberration beams based on off-axis beams formed by the rotation-symmetrical lens systems is used. Alternatively, a recording optical system such as a lens system including a cylindrical lens and a decentered lens may be used.

The parallel beams are incident on the lens systems 15 and 21 for generating aberrations. In place of the collimator lens systems 13a and 13b of this embodiment, the laser beam may be converted into divergent beams using concave or convex lenses, microscope objective lenses, and the like, and the lens systems 15 and 21 may be constituted as finite imaging systems.

As described above, an off-axis type hologram lens array having a uniform brightness over the entire surfaces of the holograms and a wide field angle range is constituted by setting the sizes of the elementary holograms, so that the sizes of the imaginary aperture projected onto the corresponding surfaces of the holograms are equal to each other.

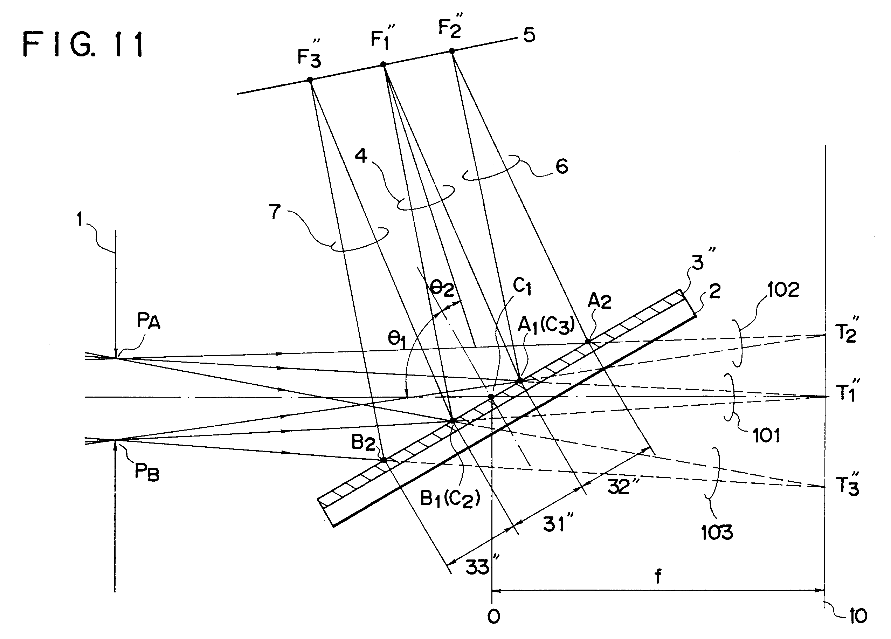

Fig. 11 is a schematic diagram showing still another embodiment of a hologram lens according to the present invention. A difference of this embodiment from the embodiment shown in Fig. 9 is that a monochrome light beam having a wavelength λ incident from an imaginary aperture 1 is not a parallel light beam but a convergent light beam.

For this reason, the sizes of divided elementary holograms are different from those in the embodiment shown in Fig. 9. In this embodiment, the sizes of the elementary holograms are determined as follows. First, an on-axis light beam will be explained below. A convergent light beam 101 is incident from the imaginary aperture surface 1 on a hologram lens array 3" formed on a substrate 2 at an incident angle $\theta_1$. The convergent light beam 101 converges at an on-axis point T1" at a distance f from and in front of a center O of the hologram lens array 3". In this case, the point T1"

is a point on a virtual image plane 10.

Points PA and PB respectively indicate aperture upper and lower portions of the imaginary aperture 1. A region from a point A1 to a point B1 where the outermost peripheral rays of the convergent light beam 101 cross the hologram lens array A1 is defined as an elementary hologram 31". At this time, the upper end point A1 of the elementary hologram 31" is a crossing point between a straight line T1"PA connecting the points T1" and PA, and the hologram lens array 3", and the lower end point B1 of the elementary hologram 31 is a crossing point between a straight line T1"PB connecting the points T1" and PB, and the hologram lens array 3".

If a point where a straight line connecting the aperture lower end point PB of the imaginary aperture 1 and the point A1 crosses the virtual image plane 10 is represented by T2", a region from the point A1 to a point A2 where the outermost peripheral rays of a convergent light beam 102 passing the imaginary aperture 1 and converging to the point T2" cross the hologram lens array 3" is defined as an elementary hologram 32". At this time, the upper end point A2 of the elementary hologram 32" is a crossing point between a straight line T2"PA connecting the points T2" and PA, and the hologram lens array 3".

Similarly, if a point where a straight line connecting the upper end point PA of the imaginary aperture 1 and the point B1 crosses the virtual image plane 10 is represented by T3", a region from the point B1 to a point B2 where the outermost peripheral rays of a convergent light beam 103 passing the imaginary aperture 1 and converging to the point T3" cross the hologram lens array is defined as an elementary hologram 33". At this time, the lower end point B2 of the elementary hologram 33" is a crossing point between a straight line T3"PB connecting the points T3" and PB, and the hologram lens array 3".

In this embodiment, the elementary hologram 31" is recorded to satisfy a Bragg condition for only the convergent light beam 101 as in the above embodiments. Thus, the convergent light beam 101 is reflectively diffracted by only the elementary hologram 31", and is focused at a point F1" on the imaging surface 5.

Similarly, the elementary holograms 32" and 33" are respectively recorded to satisfy the Bragg condition for only the convergent light beams 102 and 103. Thus, the convergent light beams 102 and 103 are respectively reflectively diffracted by only the elementary holograms 32 and 33, and are focused at points F2" and F3".

In this embodiment, the center wavelength of a light beam imaged by the hologram lens array 3" is set to be 530 mm, the aperture diameter of the imaginary aperture 1 is set to be 10 mm, the incident angle $\theta_1$ of light incident at the center C of the hologram lens array 3" is set to be 60°, the diffraction angle $\theta_2$ is set to be 20°, the distance from the center of the elementary hologram 31" to the image surface 5 is set to be 50 mm, and the distance from a point C1 to the center of the imaginary aperture 1 is also set to be 50 mm.

At this time, assuming a coordinate system having the center of the imaginary aperture 1 as an origin, a straight line PAPB as a y-axis, and the optical axis as an x-axis, the upper end point A1 of the elementary hologram 31" = (58.18, 4.72) (unit = mm; the same applies to the following description), and the lower end point B1 = (41.68, -4.80).

Therefore, the meridional size of the elementary hologram 31" is 19.05 mm. Since the upper end point A2 of the elementary hologram 32" = (80.68, 17.72), the meridional size of the elementary hologram 32" is 25.98 mm. In addition, since the lower end point B2 of the elementary hologram 33" = (29.72, -11.71), the meridional size of the elementary hologram 33 is 13.81 mm.

According to this embodiment, a divergent light beam incident on a predetermined range of the hologram lens array 3" when a light beam is traced in the reverse direction from the point on the imaging surface 5 is reflectively diffracted, and thereafter, becomes a divergent light beam incident on the imaginary aperture 1 having the predetermined diameter. At the same time, the imaging surface 5 is imaged as the virtual image plane 10 by the hologram lens array 3", and when an observer sets his or her pupil at the position of the imaginary aperture 1, he or she can observe a virtual image free from an eclipse.

The dividing method of the hologram lens of this embodiment can also be applied to determination of the sizes of the elementary holograms in the horizontal direction, a dividing method of a hologram lens including more elementary holograms, a dividing method of a transmission off-axis type hologram lens array, and the like, as in the embodiment shown in Fig. 9.

A method of manufacturing an off-axis type hologram lens array according to the present invention will be described below. If a photosensitive material has a refractive index of 1.5, the elementary hologram 31 has, at the point C1 on the hologram surface, a grating constant yielding a longitudinal grating pitch $P_{C1}$ = 1.011 $\mu$m, a grating inclination angle $\phi'_{C1}$ = 11.042°, and a grating interval $d_{C1}$ = 0.194 $\mu$m. The hologram 31" has, at a point C2, a grating constant yielding $P_{C2}$ = 1.416 $\mu$m, $\phi_{C2}$ = 80.70°, and $d_{C2}$ = 0.199 $\mu$m, and has, at the point C3, a grating constant yielding $P_{C3}$ = 0.908 $\mu$m, $\phi_{C3}$ = 12.192°, and $d_{C3}$ = 0.192 $\mu$m.

A method of recording the elementary hologram having these grating constants on a photosensitive material with a refractive index of 1.5 using an argon ion laser having a recording wavelength of 514.5 nm will be described below.

In this embodiment, a photopolymer is used as a recording material. The basic arrangement of a recording optical system of the hologram lens array of this embodiment is the same as that in the embodiment shown in Fig. 9. The recording optical system of the hologram lens array of this embodiment performs recording by a method substantially the same as that shown in Fig. 6. The incident angles of light beams incident on the photosensitive materials at respective points will be explained below using reference numerals used in Figs. 7 and 8.

In this embodiment, the incident angles of a light beam 19 are $\theta_{r1}$(C1) = 69.72° at the point C1, $\theta_{r1}$(C2) = 68.91° at the point C2, and $\theta_{r1}$(C3) = 70.14° at the point C3.

On the other hand, the incident angles of a light beam 22 are $\theta_{r2}$(C1) = 25.41° at the point C1, $\theta_{r2}$(C2) = 34.73° at the point C2, and $\theta_{r2}$(C3) = 21.97° at the point C3.

When the elementary holograms are recorded by a means such as a step & repeat technique using the light beams satisfying the above-mentioned incident angles, the hologram lens array of the present invention can be manufactured.

A method of forming an aperture for the elementary holograms, a method of manufacturing the holograms, a method of adjusting incident light beams, a method of generating aberrations, and the like are the same as those in the embodiment shown in Fig. 9.

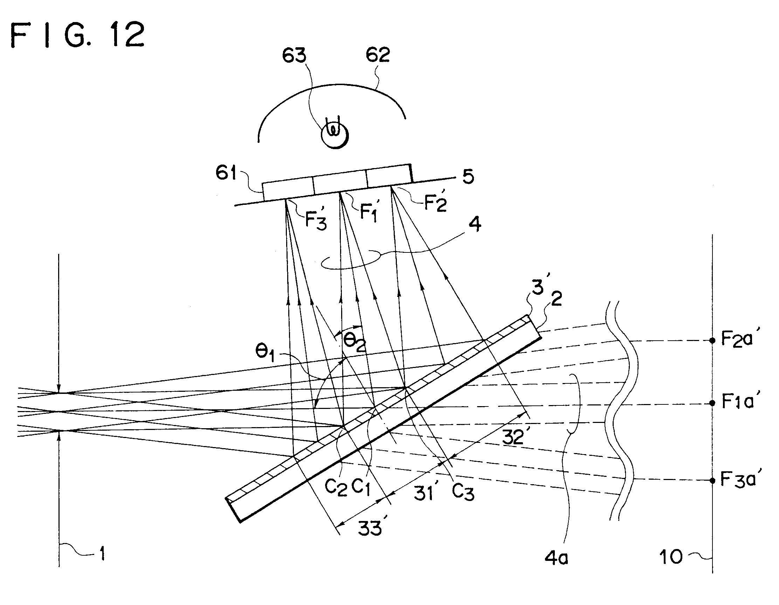

Fig. 12 is a schematic diagram showing main part of still another embodiment of the present invention. In this embodiment, the hologram lens 3' shown in Fig. 9 is applied to a helmet mount display (HMD) apparatus as a beam combining element. The same reference numerals in Fig. 12 denote the same parts as in Fig. 9.

In this embodiment, a light beam emitted from a light source 63 such as a halogen lamp is converted into substantially parallel light by a lamp house 62 having a proper shape, and illuminates a liquid crystal display element 61 as image information of an image display. A light beam 4 emitted from image information at a point F1' on a display surface 5 of the liquid crystal display element 61 is incident on the hologram lens array 3' formed on the transparent substrate 2 consisting of glass, plastic, or the like.

The hologram lens array 3' has the elementary hologram 31' which satisfies the Bragg condition for only the light beam 4. The light beam 4 is reflected and diffracted by only the elementary hologram 31', and is incident on a pupil 1 of an observer corresponding to the imaginary aperture 1 shown in Fig. 9. At this time, the elementary hologram 31, has a lens effect for converting the light beam 4 into a parallel light beam. The observer observes the image information at the point F1' on the display surface 5 as a virtual image based on a light beam 4a diverging from an infinity point F1'a in front of the hologram lens array 3' in an eclipse free state.

For the same reason as described above, light beams emitted from image information at points F2' and F3' on the display surface 5 of the liquid crystal display element 61 are respectively reflectively and diffracted by only the elementary holograms 32' and 33' in the direction of the pupil 1 of the observer. Thus, the observer observes the image information at the points F2' and F3' as virtual images based on the light beams diverging from infinity points F'2a and F'3a in front of the hologram lens array 3' in an eclipse free state.

As described above, the points on the display surface 5 of the liquid crystal display element 61 are reflected and diffracted by the elementary holograms 31', 32', and 33' to form a virtual image plane 10.

In the present invention, even when a white light source is used, since each elementary hologram has a wavelength selectivity (wavelength dependency of the diffraction efficiency), it has a peak of the diffraction efficiency in a light beam having a center wavelength $\lambda_0$ satisfying the Bragg condition. If the half-width at this time is represented by $2\Delta\lambda$, the elementary hologram exhibits a diffraction effect for only white light beam components falling within a wavelength range from $\lambda_0 - \Delta\lambda$ to $\lambda_0 + \Delta\lambda$. For this reason, in this embodiment, the halogen lamp is used as the light source.

In this embodiment, the HMD apparatus is constituted using the reflection off-axis type hologram lens array. The HMD apparatus may be similarly constituted using a transmission off-axis type hologram lens array.

Furthermore, in this embodiment, the image surface of the hologram lens array 3' coincides with the display surface 5 of the liquid crystal display element 61. Alternatively, the display surface of a CRT or a liquid crystal display element may be converted by a relay lens into an intermediate imaging plane of a relay lens, so that the intermediate imaging plane coincides with the display surface 5 (the object surface of the hologram lens array) of this embodiment.

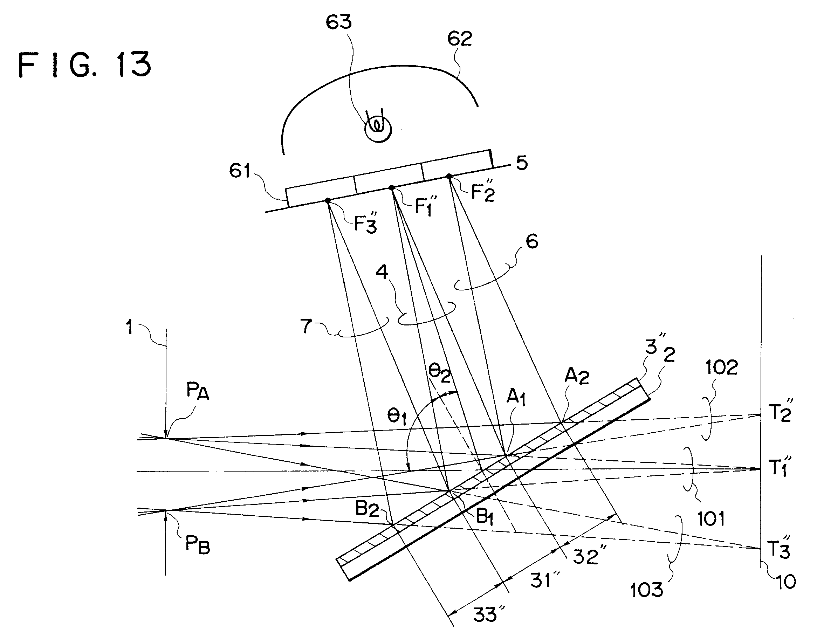

Fig. 13 is a schematic diagram showing still another embodiment of the present invention. In this embodiment, the hologram lens 3'' shown in Fig. 11 is applied to a helmet mount display (HMD) apparatus as a beam combining element. The same reference numerals in Fig. 13 denote the same parts as in Fig. 11.

The basic arrangement of this embodiment is substantially the same as that in the embodiment shown in Fig. 12, except that a virtual image plane 10 observed by an observer is present at a finite distance position.

In this embodiment, a light beam emitted from a light source 63 such as a halogen lamp is converted into substantially parallel light by a lamp house 62 having a proper shape, and illuminates a liquid crystal display element 61 as image information of an image display. A light beam 4 emitted from image information at a point F1'' on a display surface 5 of the liquid crystal display element 61 is incident on the hologram lens array 3'' formed on the transparent substrate 2 consisting of glass, plastic, or the like.

The hologram lens array 3'' has the elementary hologram 31'' which satisfies the Bragg condition for only the light beam 4. The light beam 4 is reflectively diffracted by only the elementary hologram 31'', and is incident on a pupil 1 of an observer corresponding to the imaginary aperture 1 shown in Fig. 11.

At this time, the elementary hologram 31'' has a lens effect for converting the light beam 4 into a slightly diverging light beam. The observer observes the image information at the point F1'' on the display surface 5 as a virtual image based on a light beam 101 diverging from a point T1'' on the virtual image plane 10 at a distance f1 from and in front of the hologram lens array 3 in an eclipse free state.

For the same reason as described above, light beams emitted from image information at points F2'' and F3'' on the display surface 5 of the liquid crystal display element 61 are respectively reflectively and diffracted by only the elementary holograms 32'' and 33'' in the direction of the pupil 1 of the observer. Thus, the observer observes the image information at the points F2'' and F3'' as virtual images based on the light beams diverging from points T2'' and T3'' at the distance f1 from and in front of the hologram lens array 3 in an eclipse free state.

As described above, the points on the display surface 5 of the liquid crystal display element 61 are reflected and diffracted by the elementary holograms 31'', 32'', and 33'' to form the virtual image plane 10.

In this embodiment, the halogen lamp is used as the light source for the same reason as described in the above embodiment.

In this embodiment, the HMD apparatus is constituted using the reflection off-axis type hologram lens array. The HMD apparatus may be similarly constituted using a transmission off-axis type hologram lens array.

Furthermore, in this embodiment, the image surface of the hologram lens array 3" coincides with the display surface 5 of the liquid crystal display element 61. Alternatively, the display surface of a CRT or a liquid crystal display element may be converted by a relay lens into an intermediate imaging plane of a relay lens, so that the intermediate imaging plane coincides with the display surface 5 (the object surface of the hologram lens array) of this embodiment.

As described above, in the embodiments shown in Figs. 9 to 13, since the off-axis type hologram lens array is divided into elementary holograms to have sizes corresponding to the beam sizes of light beams incident from the imaginary aperture, an image surface having a uniform brightness can be formed.

In a display apparatus, which reflectively diffracts information light from a CRT or a liquid crystal display element using the off-axis type hologram lens array to allow observation of the image information, light beams from the display surface are incident within the imaginarily set aperture. For this reason, when an observer sets his or her pupil at the position of the imaginary aperture, he or she can satisfactorily observe a large virtual image free from an eclipse.

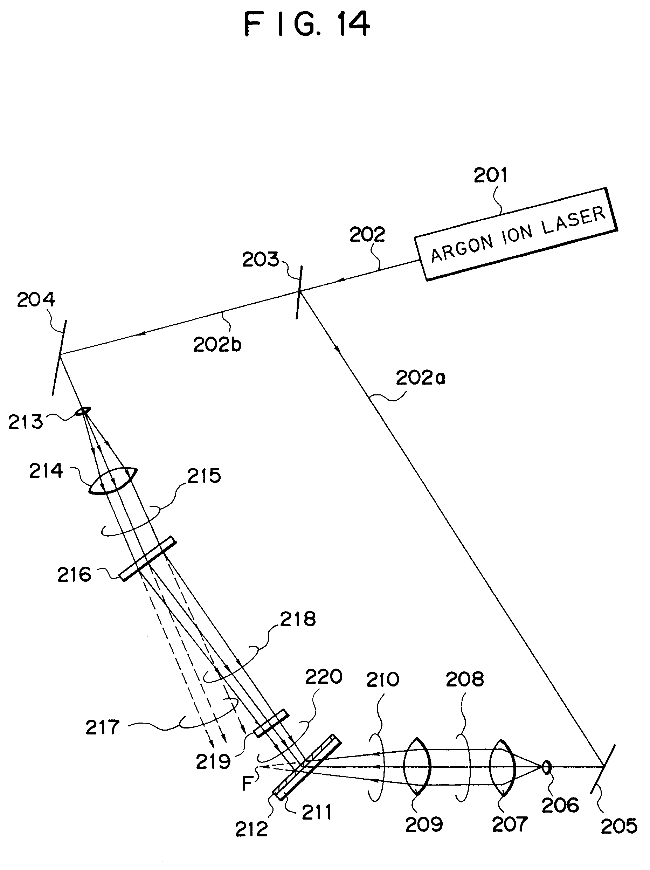

Fig. 14 is a schematic diagram showing an optical system (recording optical system) used in the manufacture of a hologram lens of the present invention.

In Fig. 14, a laser beam 202 having a wavelength of 514.5 nm from an argon ion laser 201 is split by a half mirror 203 into two beams. An optical path of one beam corresponds to an optical system for generating object light, and an optical path of the other beam corresponds an optical system for generating reference light. A light beam 202a reflected by the half mirror 203 is reflected by a mirror 205, and its beam size is enlarged by a microscope objective lens 206. Thereafter, the light beam 202a is collimated into a parallel light beam 208 by a collimator lens 207, and the light beam 208 is incident on a convergent lens 209. The light beam converged by the convergent lens 209 is converted into a convergent spherical wave 210 which has a predetermined radius of curvature to converge at a point F, and is then incident on a hologram photosensitive material 212 coated or adhered on a transparent substrate 211 such as a glass substrate.

On the other hand, a light beam 202b transmitted through the half mirror 203 is reflected by a reflection mirror 204, and its beam size is enlarged by a microscope objective lens 213. Thereafter, the light beam 202b is collimated into a parallel light beam 215 by a collimator lens 214, and the light beam 215 is incident on a computer generated hologram (to be abbreviated as a "CGH" hereinafter) 216 having an arrangement to be described later at a predetermined incident angle.

Of diffracted light from the CGH 216, 1st-order diffracted light 218 is converted into a light beam 220 of a wavefront mainly having an astigmatism via a cylindrical lens 219, and the converted light beam is incident on the hologram photosensitive material 212 on the substrate 211.

The two light beams 210 and 220 incident on the hologram photosensitive material 212 from its two sides interfere with each other, and interference fringes are recorded on the hologram photosensitive material 212. The hologram photosensitive material 212 is subjected to a known developing process, thus manufacturing the hologram lens.

In this embodiment, the respective elements are set, and the distance between the CGH 216 and the cylindrical lens 219 is properly set, so that 0th-order light 217 is prevented from being incident on the cylindrical lens 219, and the 1st-order diffracted light 218 is incident on the cylindrical lens 219 at an angle of about 8° when the parallel light beam 215 incident on the CGH 216 is diffracted and emerges therefrom.

As the cylindrical lens 219, a plano-convex lens having a flat surface facing the hologram photosensitive material 212, and a focal length of 125 mm is used.

A method of manufacturing the CGH 216 of this embodiment will be described below.

Conventionally, in order to manufacture a CGH, an enlarged hologram is formed by an X-Y plotter, and is optically exposed in a reduced scale.

However, with this method, the reduction process suffers from errors of an optical system and its arrangement, and especially in a hologram with a high N.A, a CGH having a satisfactory performance cannot be obtained.

However, along with the improvement of the semiconductor integrated circuit manufacturing technique in recent years, micro-processes can be performed by an electron beam (EB) exposure method. With this EB exposure method, a micro-pattern can be formed on a hologram photosensitive material. Since a reduction process using an optical system can be omitted, a high-performance CGH can be obtained. Examples of a photosensitive material for the EB exposure CGH include poly-methylmethacrylate (p-MMA), poly-t-butylmethacrylate (p-BMA), polymethacrylic acid anhydride (p-MA•AN), and the like, and gratings having line widths on the order of submicrons can be formed.

In this embodiment, the CGH obtained by EB-exposure of p-MMA is used.

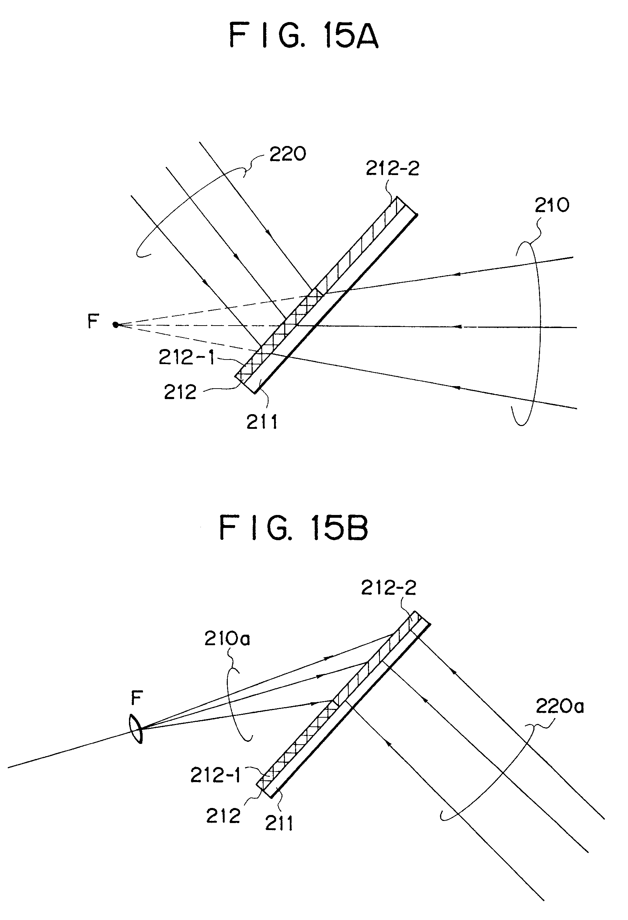

Figs. 15A and 15B are schematic views showing still another embodiment of the present invention. In this embodiment, a hologram lens array consisting of a plurality of elementary holograms divided into a plurality of regions is to be manufactured. In Figs. 15A and 15B, the hologram lens array consists of two elementary holograms 212-1 and 212-2 for the sake of simplicity. However, the number of elementary holograms is not particularly limited.

Fig. 15A shows an optical path near a hologram recording material 212-1 in 212 when a first elementary hologram is recorded using the optical system shown in the embodiment of Fig. 14.

In Fig. 15A, coherent light from a laser light source is split into a spherical wave 210 which is focused at the point F and a wavefront 220 given with aberrations by the CGH 216 and the cylindrical lens 219, and these waves are incident on the hologram recording material 212-1 on the substrate 211 from opposite sides. First interference fringes are recorded on the hologram recording material 212-1.

Second interference fringes are recorded on a hologram recording material 212-2 by the same optical system as in the embodiment shown in Fig. 14. Fig. 15B is a schematic view of the optical system, near the hologram recording material 212-2, for recording the second interference fringes at that time.

The second interference fringes are recorded on the hologram recording material 212-2 in such a manner that a spherical wave 210a diverging from the point F, and a wavefront 220a given with aberrations by the CGH 216 and the cylindrical lens 219 are incident on the hologram recording material 212-2 from opposite sides.

In this embodiment, a means for, when the elementary holograms are exposed, shielding unnecessary light from becoming incident on a portion other than an exposure portion of the hologram recording material using a photographic plate holder or a proper mask is arranged.

In this embodiment, the elementary holograms 212-1 and 212-2 are joined so that the edges of the holograms are located adjacent to each other. Since the optical characteristics of the elementary holograms of this embodiment have the same function of focusing reproduction light at the point F, the elementary holograms can slightly overlap each other.

In this case, the phases of the elementary holograms need not always be in phase.

The holograms obtained in this embodiment can eliminate many drawbacks as compared to a conventional hologram manufacturing method.

The optical system for manufacturing the holograms in this embodiment is greatly simplified as compared to the conventional optical system shown in Fig. 2, and can use ready-made parts. As shown in Fig. 14, the optical systems for respectively expanding the laser beam 202 to spherical waves via the microscope objective lenses 206 and 213, and collimating the spherical waves via the collimator lenses 207 and 214 are rotation-symmetrical about the optical axis, thus allowing easy alignment. In addition, these lenses can use inexpensive products used in large quantities in other fields.

When the microscope objective lenses 206 and 213 use infinity-corrected lenses for a metal microscope, almost no aberrations are generated, and the collimator lenses 207 and 214 can use telescope objective lenses or telephoto lenses.

The lenses need only have minimum diameters so as to cover the required area of the elementary hologram. Furthermore, in the manufacturing method shown in Figs. 15A and 15B, since a required recording area per exposure is small, very inexpensive optical systems can be used.

As a secondary merit, since a hologram having a small area requires a short exposure time for recording, the yield of products can be improved. Since the pitch in the direction perpendicular to gratings of the diffraction grating used in the present invention is as small as 0.15 $\mu$m, the diffraction efficiency is considerably decreased by even a slight vibration during exposure. Therefore, the short exposure time can provide a great merit.

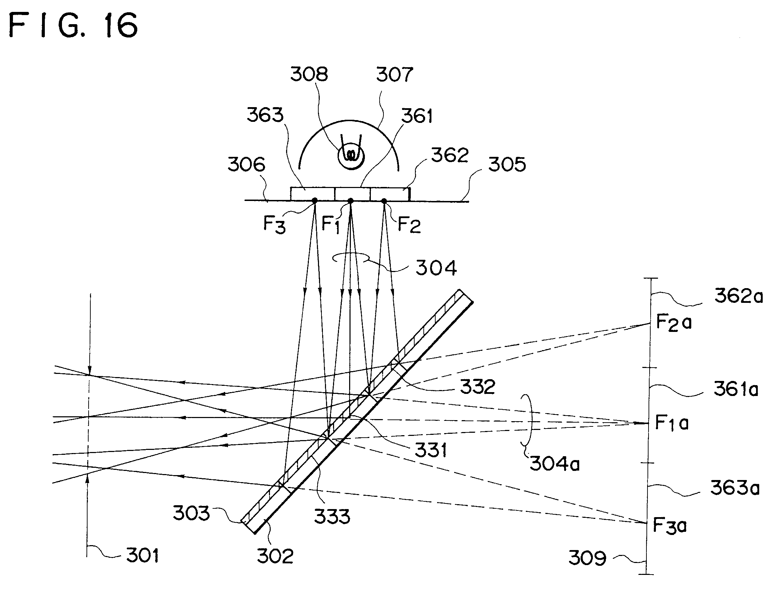

Fig. 16 is a schematic diagram showing still another embodiment of the present invention. In this embodiment, an image observation apparatus uses a hologram lens 212 manufactured by the method described in Figs. 15A and 15B as a beam combining element.

In this embodiment, a light beam emitted from a light source 308 such as a halogen lamp is converted into substantially parallel light by a lamp house 307 having a proper shape, and illuminates a liquid crystal display element 306 as image information of an image display. A light beam 304 emitted from image information at a point F1 on a display surface 305 of the liquid crystal display element 306 is incident on a hologram lens array 303 formed on a transparent substrate 302 consisting of glass, plastic, or the like.

The hologram lens array 303 has an elementary hologram 331 which satisfies the Bragg condition for only the light beam 304. The light beam 304 is reflectively and diffracted by only the elementary hologram 331, and is incident on a pupil 301 of an observer. At this time, the elementary hologram 331 has a lens effect for converting the light beam 304 into a slightly divergent light beam. The observer observes the image information at the point F1 on the display surface 305 as a virtual image based on a light beam 304a diverging from a point F1a in front of the hologram lens array 303.

For the same reason as described above, light beams emitted from image information at points F2 and F3 on the display surface 305 of the liquid crystal display element 306 are respectively reflectively diffracted by only elementary holograms 332 and 333 in the direction of the pupil 301 of the observer. Thus, the observer observes the image information at the points F2 and F3 as virtual images based on the light beams diverging from points F2a and F3a in front of the hologram lens array 303.

As described above, the points on the display surface 305 of the liquid crystal display element 306 are reflectively diffracted by the elementary holograms 331, 332, and 333 to form a virtual image plane 309.

In the present invention, even when a white light source is used, since each elementary hologram has a wavelength selectivity (wavelength dependency of the diffraction efficiency), it has a peak of the diffraction efficiency in a light beam having a center wavelength $\lambda_0$ satisfying the Bragg condition. If the half-width at this time is represented by $2\Delta\lambda$, the elementary hologram exhibits a diffraction effect for only white light beam components falling within a wavelength range from $\lambda_0 - \Delta\lambda$ to $\lambda_0 + \Delta\lambda$. For this reason, in this embodiment, the halogen lamp is used as the light source.

Of course, an interference filter which transmits only light beam components in a required wavelength range of the light beam from the halogen lamp may be used. In this embodiment, the elementary holograms 331, 332, and 333 respectively have satisfactorily aberration-corrected regions 361, 362, and 363, and points on the virtual image plane 309 defined by regions 361a, 362a, and 363a can be observed as point images almost free from aberrations.

As described above, according to the embodiments shown in Figs. 14 to 16, holograms can be manufactured by a simple arrangement. When specifications upon reconstruction (use) of the holograms are changed, the computer generated hologram (CGH) need only be changed, and an adverse effect caused by a vibration during exposure can be eliminated by divisionally exposing the holograms.

In the embodiment shown in Fig. 14, the cylindrical lenses perform rough aberration correction, and the CGH can perform fine adjustment of the aberration correction.

Such an arrangement is particularly convenient when a hologram lens is used as a combiner in the HMD apparatus since the HMD apparatus often uses a combiner having optical characteristics equivalent to those of cylindrical lenses.

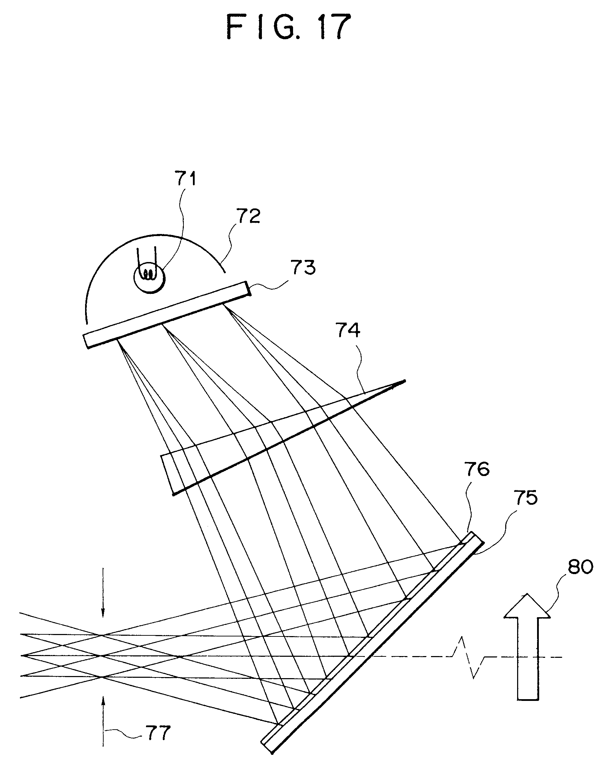

Fig. 17 is a schematic diagram showing still another embodiment of a display apparatus using a hologram lens of the present invention.

In this embodiment, a light beam emitted from a light source 71 such as a halogen lamp is converted into substantially parallel light by a lamp house 72 having a proper shape, and illuminates a liquid crystal display element 73 as image information of an image display. A prism 74 gives an astigmatism having a sign opposite to that of a hologram lens 76 (to be described later) to light beams emerging from the respective points on the liquid crystal display element 73, and these light beams are incident on the hologram lens 76 formed on a transparent substrate 75 consisting of glass, plastic, or the like.

The hologram lens 76 generates an astigmatism having a sign opposite to that given by the prism 74. For this reason, the light beams incident on the hologram lens 76 are converted into substantially parallel beams which are aberration-corrected with good balance, and the converted light beams are incident on a pupil 77 of an observer.

Thus, the observer spatially superposes image information formed in front of the hologram lens 76 by the liquid crystal display element 73 on another image information 80, and observes the superposed images in a single same view field.

The hologram lens 76 has a diffraction efficiency (Bragg diffraction) for a light beam in a specific wavelength range with respect to the incident light beams. For this reason, even when the incident light beams are white light, the observer can observe image information in color light in the wavelength range.

In this embodiment, no filter for transmitting only a light beam in the specific wavelength range is arranged. However, a filter such as an interference filter for cutting unnecessary wavelength light and preventing a chromatic aberration caused by the hologram lens may be arranged.

Similarly, a cold mirror or an infrared cut filter may be used as a countermeasure against heat or infrared rays generated by the light source 71.

The detailed numerical values of the components in the arrangement of this embodiment will be described below.

As a method of manufacturing the hologram lens 76 used in this embodiment, coherent light emitted from an argon laser having a wavelength of, e.g., 514.5 nm is split into two light beams by, e.g., a half mirror, and one of these light beams is incident at an incident angle of 0° (vertical incidence) as a divergent light beam (recording light beam) diverging from a position separated by 50 mm from a photographic plate.

The other light beam is incident on the photographic plate at an incident angle of 34°, in a direction opposite to the recording light beam, as a convergent light beam which is focused at a position separated by 100 mm from the photographic plate. Interference fringes formed by these two light beams are then recorded and developed to obtain the hologram lens.

As a photosensitive material, various materials such as dichromated gelatin a silver salt photosensitive material, a photopolymer, and the like can be used. In this embodiment, a photopolymer is used.

The prism 74 used in this embodiment consists of optical glass having a refractive index of 1.91, has a prism vertical angle of about 16° and a central thickness of about 5 mm, and is arranged at a position separated by about 21 mm from the hologram lens 76 to form an angle of about 5° with the optical axis. The distance between the prism 74 and the liquid crystal display element 73 is about 8 mm. The liquid crystal display element 73 is arranged to be inclined at an angle of about 4° with respect to the optical axis.

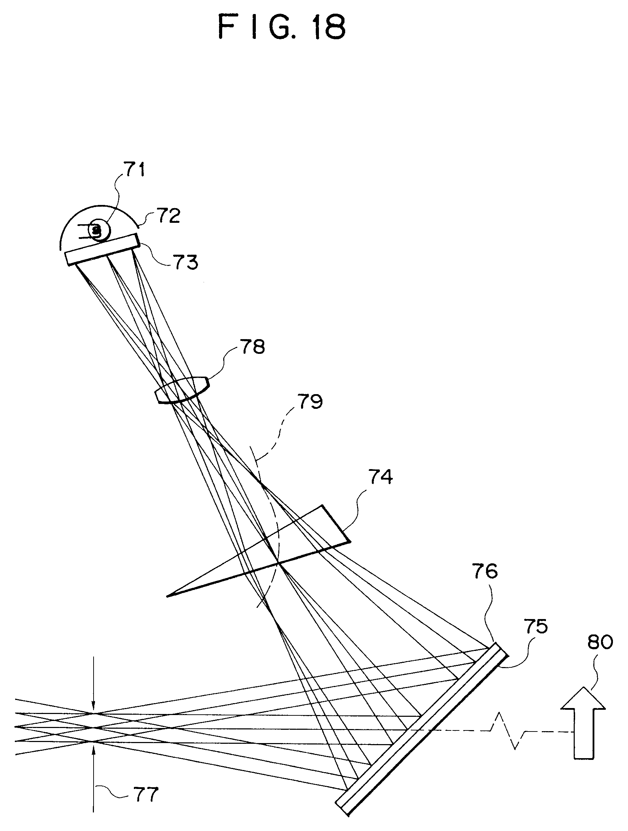

Fig. 18 is a schematic diagram showing still another embodiment of a display apparatus using a hologram lens of the present invention.

The arrangement of this embodiment is substantially the same as that of the embodiment shown in Fig. 17, except that a relay lens 78 is arranged between the liquid crystal display element 73 and the prism 74, and the prism 74 is arranged near an intermediate imaging plane 79 of the relay lens 78.

Differences from the embodiment shown in Fig. 17 will be mainly described below.

The relay lens 78 comprises a double-convex single lens having a refractive index of 1.755 and a focal length of about 14 mm. In order to correct aberrations caused by the hologram lens 76 and the prism 74, off-axis aberrations of the relay lens 78 are used. For this reason, at least a lens portion of the relay lens 78 is properly decentered and inclined from the optical axis.

The distance between the liquid crystal display element 73 and the relay lens 78 is about 26 mm, the distance between the relay lens 78 and the prism 74 is about 23 mm, and the distance between the prism 74 and the hologram lens 76 is about 37 mm. The prism 74 has a refractive index of 1.487, a prism vertical angle of about 10°, and a central thickness of about 4 mm, and its first surface (a surface facing the relay lens) is arranged to be substantially perpendicular to the optical axis.

In this embodiment, aberrations caused by the hologram lens 76 are also corrected by the relay lens 78, thus performing aberration correction more satisfactorily.

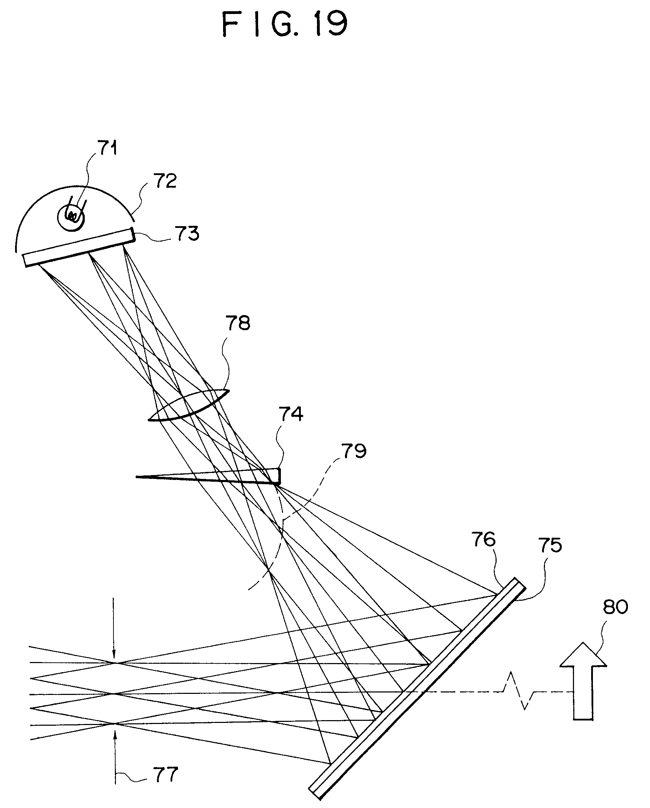

Fig. 19 is a schematic diagram showing still another embodiment of a display apparatus using a hologram lens of the present invention.

The arrangement of this embodiment is substantially the same as that of the embodiment shown in Fig. 17, except that a relay lens 78 is arranged between the liquid crystal display element 73 and the prism 74, and the prism 74 is arranged at a position nearer the relay lens 78 than an intermediate imaging plane 79 of the relay lens 78.

Differences from the embodiment shown in Fig. 17 will be mainly described below.

The relay lens 78 comprises a double-convex single lens having a refractive index of 1.755 and a focal length of about 15 mm. In order to correct aberrations caused by the hologram lens 76 and the prism 74, off-axis aberrations of the relay lens 78 are used. For this reason, at least a lens portion of the relay lens 78 is properly decentered and inclined from the optical axis.

The distance between the liquid crystal display element 73 and the relay lens 78 is about 27 mm, the distance between the relay lens 78 and the prism 74 is about 16 mm, and the distance between the prism 74 and the hologram lens 76 is about 50 mm. The prism 74 has a refractive index of 1.487, a prism vertical angle of about 5°, and a central thickness of about 1.5 mm, and its first surface (a surface facing the relay lens) is arranged to be inclined at about 30° with respect to the optical axis.

In this embodiment, aberrations caused by the hologram lens 76 are also corrected by the relay lens 78, thus performing aberration correction more satisfactorily.

In this embodiment, the size of the prism 74 can be decreased as compared to the embodiment shown in Fig. 18.

The hologram lens 76 used in each of the embodiments shown in Figs. 17, 18, and 19 is manufactured by interference between the two light beams, i.e., divergent and convergent light beams, as described above. Alternatively, aberrations may be given to these recording light beams to record holograms, thereby correcting aberrations caused upon reconstruction (use) of the holograms.

In each of the embodiments shown in Figs. 17, 18, and 19, an astigmatism is generated by the prism 76. In order to correct a coma generated in the display apparatus of the present invention, a coma may be given to the recording light beam to manufacture a hologram lens, and the display apparatus may be arranged using the obtained hologram lens.

As described above, according to the embodiments shown in Figs. 17, 18, and 19, when image information light from an image display is diffracted in the pupil direction of an observer using the hologram lens, and image information is observed as a virtual image, the prism is arranged between the image display and the hologram lens, thereby satisfactorily correcting an astigmatism generated by the hologram lens. Thus, a display apparatus which allows observation of clear image information with a high resolution can be realized.

Although not shown, in each of the embodiments shown in Figs. 4, 12, 13, and 16, a relay lens or a relay lens system may be inserted in the optical path between the image display and the hologram lens like in the embodiments shown in Figs. 18 and 19.

This invention provides an off-axis type hologram lens and a display apparatus using the same, which can satisfactorily correct aberrations caused by an off-axis arrangement of a hologram lens and an eclipse of a displayed image by a pupil of an observer by properly setting an arrangement of the off-axis type hologram lens, so that image information from an image display and another image information are spatially superposed on each other, and the superposed images can be observed in an observation field at a uniform brightness.

## Claims

1. An off-axis type hologram lens comprising:
   a substrate; and
   a plurality of elementary holograms formed on said substrate, said elementary holograms being set to have an equal N.A.

2. A hologram lens according to claim 1, wherein said hologram lens is a volume phase type hologram.

3. A display apparatus comprising:
   an image display for generating image information; and
   an off-axis type hologram lens for diffracting the image information in a predetermined direction, said lens spatially superposing the image information and image information behind said lens to allow observation of superposed images in a single same view field,
   wherein said hologram lens consists of a plurality of elementary holograms, and of light beams diverging from said image display, N.As of light beams taken in by said elementary holograms are equal to each other.

4. An apparatus according to claim 3, wherein said hologram lens is a volume phase type hologram.

5. An apparatus according to claim 3, further comprising a relay lens in an optical path between said image display and said hologram lens.

6. An off-axis type hologram lens for diffracting a light beam based on image information from an image information device in a predetermined direction to spatially superpose the image information on another image information, and allowing observation of superposed images in a single view field, comprising:
   a substrate; and
   a plurality of elementary holograms formed on said substrate, said elementary holograms having equal N.As.

7. An off-axis type hologram lens comprising:
   a substrate; and
   a plurality of elementary holograms formed on said substrate, said elementary holograms respectively having sizes equal to sizes obtained when an imaginarily set common aperture is projected onto a surface of said hologram lens at a predetermined angle.

8. A hologram lens according to claim 7, wherein said elementary holograms are arranged not to overlap each other.

9. A hologram lens according to claim 7, wherein said hologram lens is a volume phase type hologram.

10. An off-axis type hologram lens comprising:
    a substrate; and
    a plurality of elementary holograms formed on said substrate, said elementary holograms respectively having sizes equal to sizes obtained when an imaginarily set common aperture is projected onto a surface of said hologram lens at a predetermined angle as a convergent light beam which converges at a point on a predetermined plane or curved plane.

11. A hologram lens according to claim 10, wherein said elementary holograms are arranged not so as to overlap each other.

12. A hologram lens according to claim 10, wherein said hologram lens is a volume phase type hologram.

13. A display apparatus comprising:
    an image display for generating image information; and
    an off-axis type hologram lens for diffracting the image information in a predetermined direction, said lens spatially superposing the image information and image information behind said lens to allow observation of superposed images in a single view field,
    wherein said hologram lens consists of a plurality of elementary holograms, and said elementary holograms respectively have sizes equal to sizes obtained when an imaginarily set common aperture is projected onto a surface of said hologram lens at a predetermined angle.

14. An apparatus according to claim 13, wherein said elementary holograms are arranged not so as to overlap each other.

15. An apparatus according to claim 13, further comprising a relay lens in an optical path between said image display and said hologram lens.

16. A display apparatus comprising:
    an image display for generating image information; and
    an off-axis type hologram lens for diffracting the image information in a predetermined direction, said lens spatially superposing the image information and image information behind said lens to allow observation of superposed images in a single same view field,
    wherein said hologram lens consists of a plurality of elementary holograms, and said elementary holograms respectively have sizes equal to sizes obtained when an imaginarily set common aperture is projected onto a surface of said hologram lens at a predetermined angle as a convergent light beam which converges at a point on a predetermined plane or curved plane.

17. An apparatus according to claim 16, wherein said elementary holograms are arranged not so as to overlap each other.

18. An apparatus according to claim 16, further comprising a relay lens in an optical path between said image display and said hologram lens.

19. A display apparatus comprising:
    an image display for generating image information;
    a hologram lens for diffracting the image information in a predetermined direction, said lens spatially superposing the image information and image information behind said lens to allow observation of superposed images in a single same view field; and
    a prism arranged in an optical path between said image display and said hologram lens.

20. An apparatus according to claim 19, wherein said prism corrects an astigmatism caused by a diffraction effect of said hologram lens.

21. An apparatus according to claim 19, wherein said hologram lens is manufactured by using a wavefront for correcting a coma.

22. An apparatus according to claim 19, further comprising a relay lens in an optical path between said image display and said hologram lens.

23. An apparatus according to claim 22, wherein said relay lens is arranged in an optical path between said image display and said prism.

24. An apparatus according to claim 22, wherein said relay lens forms an intermediate imaging plane of said image display at a position between said prism and said hologram lens or near said prism.

25. An apparatus according to claim 22, wherein said relay lens corrects a coma of said hologram lens.

26. An apparatus according to claim 25, wherein said relay lens has a decentered lens.

27. A method of manufacturing a hologram, comprising the steps of:
    generating object light by an object light optical system;
    generating reference light by a reference light optical system,
    at least one of said object and reference light optical systems having a cylindrical lens and a computer generated hologram; and
    causing the object light and the reference light to be incident on a recording medium from predetermined directions to form interference fringes.

28. A method according to claim 27, wherein said computer generated hologram is an off-axis type hologram.

29. A method of manufacturing a hologram, comprising the steps of:
    generating a first light beam as a convergent or divergent spherical wave;
    generating a second light beam using an optical system including a cylindrical lens and a computer generated hologram; and
    causing the first and second light beams to be incident on a recording medium from predetermined directions to form interference fringes.

30. A method according to claim 29, wherein said computer generated hologram is an off-axis type hologram.

31. A hologram manufacturing apparatus comprising:

an object light optical system for generating object light;

reference light optical system for generating reference light; and

deflection means for causing light beams from said object and reference light optical systems to be incident on a recording medium from predetermined directions,

wherein at least one of said object and reference light optical systems has a cylindrical lens for performing rough aberration correction, and a computer generated hologram for performing fine aberration correction.

# FIG. 1

EP 0 574 005 A2

F I G. 2

# F I G. 3

# F I G. 4

# F I G. 5

A'

| (-2, +2) | (-1, +2) | (0, +2) | (+1, +2) | (+2, +2) |
| (-2, +1) | (-1, +1) | (0, +1) | (+1, +1) | (+2, +1) |
| (-2, 0) | (-1, 0) | (0, 0) $C_1$ | (+1, 0) | (+2, 0) |
| (-2, -1) | (-1, -1) | (0, -1) | (+1, -1) | (+2, -1) |
| (-2, -2) | (-1, -2) | (0, -2) | (+1, -2) | (+2, -2) |

A

# F I G. 6

# F I G. 7

# F I G. 8

FIG. 9

EP 0 574 005 A2

# F I G. 10

| (-2,+2) | (-1,+2) | (0, +2) | (+1, +2) | (+2, +2) |
|---------|---------|---------|----------|----------|
| (-2, +1) | (-1, +1) | (0, +1) | (+1, +1) | (+2, +1) |
| (-2, 0) | (-1, 0) | (0, 0) | (+1, 0) | (+2, 0) |
| (-2, -1) | (-1, -1) | (0, -1) | (+1, -1) | (+2, -1) |
| (-2, -2) | (-1, -2) | (0, -2) | (+1, -2) | (+2, -2) |

$C_1$

FIG. 11

EP 0 574 005 A2

FIG. 12

FIG. 13

EP 0 574 005 A2

# F I G. 14

# F I G. 15A

# F I G. 15B

FIG. 16

# FIG. 17

# F I G. 18

# FIG. 19